# EUROPEAN PATENT SPECIFICATION

(11) **EP 4 582 759 B1**
(45) Date of publication and mention of the grant of the patent: **28.10.2026**
(21) Application number: 24709627.4
(22) Date of filing: 01.02.2024
(51) Int. Cl.: F27B 9/02, B65G 47/54, F27B 9/24, F27B 9/38, F27B 9/39, F27D 3/00

(54) **DOUBLE-LAYER KILN WITH DOUBLE-TRACK EXTERNAL CIRCULATION LINE**
DOPPELSCHICHTOFEN MIT EXTERNER ZWEISPURIGER ZIRKULATIONSLEITUNG
FOUR À DOUBLE COUCHE DOTÉ D'UNE LIGNE DE CIRCULATION EXTERNE À DOUBLE VOIE

(30) Priority: 21.11.2023 CN 202311554681
(43) Date of publication of application: 09.07.2025
(73) Proprietor: Jiangsu Botao Intelligent Thermal Engineering Co., Ltd, Suzhou, Jiangsu 215500 (CN)
(72) Inventor: HUO, Lijun, Suzhou Jiangsu 215500 (CN); SHI, Wei, Suzhou Jiangsu 215500 (CN); JIN, Lei, Suzhou Jiangsu 215500 (CN); ZHOU, Jindong, Suzhou Jiangsu 215500 (CN)
(74) Representative: Proi World Intellectual Property GmbH
(86) International application number: PCT/CN2024/075157
(87) International publication number: WO 2025/107422

(56) References cited:
- WO-A2-2006/123838
- CN-A- 106 766 875
- CN-A- 111 351 347
- CN-A- 111 351 347
- CN-A- 117 268 096
- CN-U- 205 262 173
- CN-U- 206 875 949
- CN-U- 217 779 872
- CN-U- 217 779 872
- DE-A1- 102008 006 640
- JP-A- 2000 051 920
- KR-A- 20160 081 304

## Description

The present disclosure claims the priority of the Chinese patent application filed on November 21st, 2023 before China National Intellectual Property Administration with the application number of 202311554681.1 and the title of "Double-layer Kiln with Double-track External Circulation Line.

### Technical Field

The present disclosure relates to the field of kiln plants, and in particular to a double-layer kiln with a double-track external circulation line.

### Background Art

Traditional electric kilns mostly adopt a mode of single-channel and one-way operation. The products pass through a preheating zone, a heating zone, a high-temperature zone, a thermal insulation zone and a cooling zone in the electric kiln, and heating tubes are distributed on both sides of a sintered duct to heat the products in the kiln. Traditional electric kilns are widely used in the sintering of structural ceramics, functional ceramics, fluorescent powder, rare earth materials, lithium battery materials, magnetic materials, nanomaterials and other products. However, the electric kiln has low heat utilization and high energy consumption in the heating process, so improving the energy utilization efficiency of electric kiln has become the focus of energy saving and emission reduction in various industries.

Chinese patent CN205262173U discloses a double-layer sintering kiln, including a kiln, wherein an intermediate thermal insulation layer divides the kiln into two layers, and each layer successively has a preheating zone, a high-temperature zone and a cooling zone. The high-temperature zones of the upper and lower layers are located at a middle section of the kiln, the preheating zone of the upper layer and the cooling zone of the lower layer are located at a right side of the kiln, the preheating zone of the lower layer and the cooling zone of the upper layer are located at a left side of the kiln, and one cooling-air-driving blower is arranged in each cooling zone. The cooling zone of the upper layer is further provided with a cooling-hot-air-extraction blower for sending the cooling hot air to the preheating zone of the lower layer, and the cooling zone of the lower layer is provided with an opening hole in the intermediate thermal insulation layer for sending the hot air to the preheating zone of the upper layer. A moisture removal blower is provided in the preheating zone of each layer, each section of the kiln is provided with a roller-type conveying device, and two ends of the kiln are provided with walking platforms. The double-layer sintering kiln can achieve the technical purpose of saving energy. However, in the working process of the kiln, it is generally necessary to carry a blank material to be sintered through a sagger, and then convey the sagger and the blank material through a conveying line. When the kiln burns and shapes the blank material, it is necessary to remove the finished product in the sagger and place a new blank material, thereby reciprocating and repeating the conveying and sintering process.

However, in the above-mentioned patent, the conveying line is only provided at charging and discharging ports of the kiln for charging and discharging of the kiln, and the sagger cannot be circularly conveyed, so after the blank material is sintered and shaped, the staff is required to remove the sagger and the finished product at the discharging port of the kiln. When a new blank material is placed in the sagger, the sagger and the blank material are manually moved and conveyed to the charging port of the kiln for loading, which increases the manual labor intensity and reduces the working efficiency of the kiln.

CN111351347A discloses a dual-layered roller bed furnace, has furnace body divided into upper furnace body and lower furnace body, where lower furnace body is provided with lower conveying roller that is provided with lower heating element. CN 217779872U discloses a material automatic returning system for heating kiln, has kiln tail of roller kiln provided with conveying mechanism for driving material disc to move, where gap between conveying mechanisms is provided with another mechanism. WO2006/123838A2 discloses a heating apparatus for e.g. glass substrate, has feed mechanism, first heating furnace for heating workpiece to at least a target temperature, and second heating furnace for heating workpiece to temperature lower than the target temperature.

### Summary of the Invention

The object of the present disclosure is to propose a double-layer kiln with a double-track external circulation line, so as to overcome the above-mentioned technical problems in the prior art.

In order to solve the above-mentioned technical problem, the present disclosure provides a double-layer kiln with a double-track external circulation line, including a lower kiln body and an upper kiln body arranged in a double-layered manner from bottom up. An inner track line is mounted between a charging port and a discharging port of the lower kiln body, an outer track line is mounted between a charging port and a discharging port of the upper kiln body, and circulation conveying lines are formed in a surrounding manner both between the lower kiln body and the inner track line, and between the upper kiln body and the outer track line, for circularly conveying a sagger carrying a blank material to be sintered.

The inner track line includes an inner track main conveying line and an inner track charging and discharging line, the outer track line includes an outer track main conveying line and an outer track charging and discharging line, and both ends of the inner track main conveying line and the outer track main conveying line are in communication with each other via a reversing mechanism, such that two groups of circulation conveying lines are in communication with each other, and the sagger is able to be exchanged and conveyed between the two groups of circulation conveying lines.

The reversing mechanism includes a frame, a transverse conveying roller set, a longitudinal conveying roller set and a lifting assembly. The transverse conveying roller set and the longitudinal conveying roller set are distributed in a staggered manner on a top surface of the frame, and the longitudinal conveying roller set is mounted on the frame via the lifting assembly.

In an implementation, the inner track charging and discharging line includes an inner track charging line provided at a charging end of the lower kiln body and an inner track discharging line provided at a discharging end of the lower kiln body, wherein two sides of a charging end of the inner track charging line are respectively in communication with the inner track main conveying line and the reversing mechanism, and a discharging end of the inner track discharging line is in communication with another group of reversing mechanism.

In an embodiment, the outer track charging and discharging line includes an outer track charging line provided at a charging port of the upper kiln body and an outer track discharging line provided at a discharging port of the upper kiln body, a discharging elevating frame is mounted at a terminal end of the outer track discharging line, and one end of the discharging elevating frame is in communication with the outer track main conveying line. A terminal end of the outer track main conveying line is in communication with the reversing mechanism, a charging transfer line is connected and mounted on one side of the reversing mechanism, and a charging elevating frame is mounted between the charging transfer line and the outer track charging line.

In an embodiment, the transverse conveying roller set includes a plurality of roller shafts, a plurality of transverse conveying roller grooves and a transverse conveying drive unit. The plurality of transverse conveying roller grooves are distributed at an equal distance and opened on the top surface of the frame. The plurality of roller shafts are rotatably mounted in each of the transverse conveying roller grooves, and the plurality of roller shafts rotate synchronously under drive by the transverse conveying drive unit.

In an embodiment, the transverse conveying drive unit includes a main shaft, a transverse conveying motor and a plurality of first driven wheels. The main shaft is rotatably mounted on one side of the frame and is perpendicular to the transverse conveying roller groove, and the transverse conveying motor is fixedly mounted on one side of the frame and is in transmission connection with one end of the main shaft. The main shaft is provided with a plurality of first driving wheels corresponding to the transverse conveying roller grooves one by one. The plurality of first driven wheels are respectively fixedly mounted at one end of the plurality of roller shafts, and the first driving wheels are in transmission connection with the plurality of first driven wheels in corresponding transverse conveying roller grooves via a first transmission belt.

In an embodiment, the longitudinal conveying roller set includes a plurality of rollers and a plurality of longitudinal conveying roller grooves, wherein the plurality of longitudinal conveying roller grooves are distributed at an equal distance and opened on the top surface of the frame, and the plurality of longitudinal conveying roller grooves and the plurality of transverse conveying roller grooves are distributed in a staggered manner. End plates are slidably mounted at both ends inside each of the longitudinal conveying roller grooves, and the roller is rotatably mounted between two end plates.

In an embodiment, the lifting assembly includes a support plate, wherein the support plate is fixedly mounted on an upper end of the frame, a lifting column is fixedly mounted on a top surface of the support plate, a lifting plate is fixedly mounted on a top end of the lifting column, and a bottom end of the end plate is fixedly mounted on a top surface of the lifting plate.

In an embodiment, one side of the frame is provided with a transmission groove vertically distributed with the longitudinal conveying roller groove, the transmission groove is in communication with the longitudinal conveying roller groove via a lifting chute, one end of the roller extends into the transmission groove through the lifting chute, a synchronization wheel is fixedly mounted at an end of the roller, and a plurality of synchronization wheels are in transmission connection via a synchronization belt. A longitudinal conveying motor is fixedly mounted on the top surface of the lifting plate, a second driving wheel is mounted on an output shaft of the longitudinal conveying motor, a second driven wheel is fixedly mounted on an end of one of the rollers, and the second driving wheel is in transmission connection with the second driven wheel via a second transmission belt.

In an embodiment, a locking mechanism is mounted on the frame is further for clamping and limiting the roller, the locking mechanism includes a positioning plate and a lifting sliding block, the lifting sliding block is slidably mounted in a lifting chute, and the lifting sliding block is rotatably connected to an end of the roller. The positioning plate is fixedly mounted on an upper end of the lifting chute, a lifting shaft is slidably mounted on the positioning plate, a bottom plate is fixedly mounted on a bottom of the lifting shaft, a lifting seat is fixedly mounted on a top end of the lifting shaft, a connecting rod is rotatably mounted on each of both ends of the lifting seat, one end of the connecting rod is inclined upwards and is rotatably connected to a lever, the lever is rotatably mounted on the frame, and a bottom end of the lever is rotatably mounted with a clamping block located on one side of the lifting chute.

In an embodiment, a lower end of the lifting shaft is sheathed with a spring abutting between the positioning plate and the bottom plate.

The present disclosure has the following advantageous effects.
1. In the present disclosure, the inner track line is mounted between the charging port and the discharging port of the lower kiln body, and the outer track line is mounted between the charging port and the discharging port of the upper kiln body, such that the circulation conveying line is formed around both between the lower kiln body and the inner track line and between the upper kiln body and the outer track line for circularly conveying the sagger carrying the blank material to be sintered, and the sagger and the blank material are moved and conveyed to the charging port of the kiln for loading, without manually moving and conveying the sagger and the blank material for loading, thereby reducing the manual labor intensity and improving the loading efficiency and the working efficiency of the kiln.
2. In the present disclosure, both ends of the inner track main conveying line and the outer track main conveying line are in communication with each other via the reversing mechanism, such that the two groups of circulation conveying lines are in communication with each other, and the sagger is able to be exchanged and conveyed between the two groups of circulation conveying lines. When a time required for sintering the kiln is short and a loading frequency is fast, the lower kiln body and the upper kiln body are loaded and unloaded respectively via the inner track line and the outer track line so as to meet requirements for loading and unloading the kiln. However, when the blank material is sintered for a long time and the loading frequency is slow, the main conveying line of the inner track line is able to be stopped, and only the main conveying line of the outer track line cooperates with other conveying lines to load and unload two kilns, so that the purpose of energy saving can be achieved.
3. The longitudinal conveying roller set of the reversing mechanism of the present disclosure is mounted to the frame through the lifting assembly that drives the longitudinal conveying roller set down below the transverse conveying roller set when the sagger and the blank material are conveyed by the transverse conveying roller set, thereby preventing the longitudinal conveying roller set from interfering with the transverse conveying roller set. Accordingly, as the longitudinal conveying roller set conveys the sagger and the blank material, the lifting assembly drives the longitudinal conveying roller set upward to a position higher than the transverse conveying roller set. A height of the longitudinal conveying roller set is adjusted by the lifting assembly to enable the longitudinal conveying roller set and the transverse conveying roller set to be staggered up and down, so as to prevent friction resistance of the other roller set from interfering with the conveying of the sagger during the conveyance work of the transverse conveying roller set and the longitudinal conveying roller set, and ensure that the reversing mechanism is able to stably convey the sagger and the blank material.
4. In the present disclosure, the frame is mounted with THE locking mechanism for clamping and limiting the rollers in the longitudinal conveying roller set, and when the longitudinal conveying roller set carries out conveying work upwards, the locking mechanism clamps and limits the lifting sliding block where the rollers are located, thereby improving the stability of the lifting sliding block and the roller installation, further improving the stability of the conveyance of the longitudinal conveying roller set, and preventing the rollers from shaking when the longitudinal conveying roller set performs conveyance.

It certainly would be understood that it is not necessary for any product embodying the present disclosure to achieve all of the advantages described above simultaneously.

### Brief Description of the Drawings

In order to explain the technical solutions in the embodiments of the present disclosure more clearly, the following contents will briefly introduce the drawings which need to be used in the embodiments. It would be obvious that the drawings in the following description are only some embodiments of the present disclosure, and it is possible for a person skilled in the art to obtain other drawings according to these drawings provided without involving any inventive effort.
Fig. 1 is a three-dimensional schematic structural view of a double-layer kiln of the present disclosure;
Fig. 2 is a partially enlarged schematic structural view at A in Fig. 1 of the present disclosure;
Fig. 3 is a three-dimensional schematic structural view of a reversing mechanism of the double-layer kiln of the present disclosure;
Fig. 4 is a first three-dimensional sectional schematic structural view of the reversing mechanism of the present disclosure;
Fig. 5 is a partially enlarged schematic structural view at B in Fig. 4 of the present disclosure;
Fig. 6 is a partially enlarged schematic structural view at C in Fig. 4 of the present disclosure;
Fig. 7 is a second three-dimensional sectional schematic structural view of the reversing mechanism of the present disclosure;
Fig. 8 is a partially enlarged schematic structural view at D in Fig. 7 of the present disclosure;
Fig. 9 is a schematic structural view showing the mounting of a longitudinal conveying roller set on a frame in the reversing mechanism of the present disclosure; and
Fig. 10 is a partially enlarged schematic structural view at E in Fig. 9 of the present disclosure.

### Detailed Description of the Invention

The embodiments of the present disclosure will now be described more clearly and fully hereinafter with reference to the accompanying drawings, in which embodiments of the disclosure are shown.

In the description of the present disclosure, it should be noted that the terms "opening hole", "upper", "lower", "top", "intermediate", "inner", etc. indicate an orientation or positional relationship, are merely to facilitate the description of the present disclosure and simplify the description, and do not indicate or imply that the assemblies or elements referred to must have a particular orientation or be constructed and operated in a particular orientation, and thus should not be construed as limiting the present disclosure.

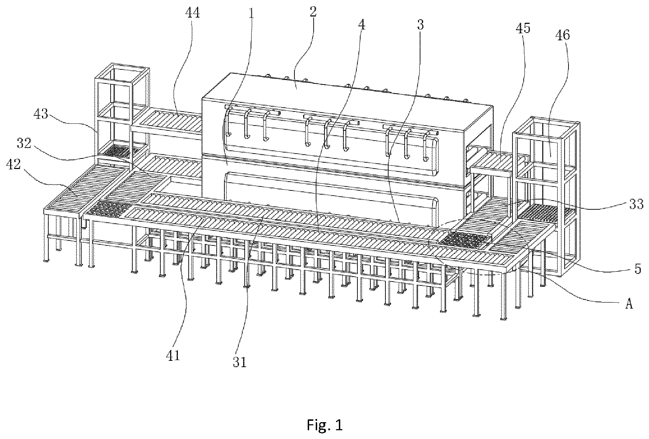

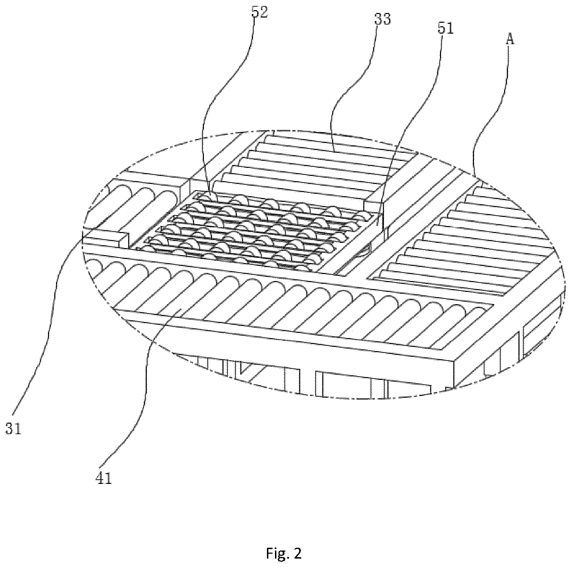

Referring to Figs. 1 and 2, the present disclosure is a double-layer kiln with a double-track external circulation line, including a lower kiln body 1 and an upper kiln body 2 arranged in a double-layered manner from bottom up. An inner track line 3 is mounted between a charging port and a discharging port of the lower kiln body 1, an outer track line 4 is mounted between a charging port and a discharging port of the upper kiln body 2, and circulation conveying lines are formed in a surrounding manner both between the lower kiln body 1 and the inner track line 3 and between the upper kiln body 2 and the outer track line 4 for circularly conveying a sagger carrying a blank material to be sintered. The inner track line 3 includes an inner track main conveying line 31 and an inner track charging and discharging line, and the outer track line 4 includes an outer track main conveying line 41 and an outer track charging and discharging line. Both ends of the inner track main conveying line 31 and the outer track main conveying line 41 are in communication with each other via a reversing mechanism 5, such that two groups of circulation conveying lines are in communication with each other, and the sagger is able to be exchanged and conveyed between the two groups of circulation conveying lines. The reversing mechanism 5 includes a frame 51, a transverse conveying roller set, a longitudinal conveying roller set and a lifting assembly. The transverse conveying roller set and the longitudinal conveying roller set are distributed in a staggered manner on a top surface of the frame 51, and the longitudinal conveying roller set is mounted on the frame 51 via the lifting assembly. In the present disclosure, the inner track line 3 and the outer track line 4 cooperate with the lower kiln body 1 and the upper kiln body 2 to circularly convey the sagger carrying the blank material to be sintered, and move and transport the sagger and the blank to a charging port of the kiln for loading, without manually moving and transporting the sagger and the blank material for loading, thereby reducing a manual labor intensity and improving a loading efficiency and a working efficiency of the kiln. The reversing mechanism 5 exchanges and transports the sagger between the inner track line 3 and the outer track line 4, and when a time required for sintering the kiln is short and the loading frequency is fast, the inner track line 3 and the outer track line 4 respectively load and unload the lower kiln body 1 and the upper kiln body 2, so as to meet requirements of the loading and unloading of the kiln. When the sintering time of the blank material is long and the loading frequency is slow, the main conveying line of the inner track line 3 is able to be stopped, and only the main conveying line of the outer track line 4 cooperates with other conveying lines to load and unload the two kilns, so that the purpose of saving energy can be achieved. When the sagger and blank material are conveyed by the transverse conveying roller set in the reversing mechanism 5, the longitudinal conveying roller set is moved down to a position lower than the transverse conveying roller set by the lifting assembly. Accordingly, as the longitudinal conveying roller set conveys the sagger and the blank material, the lifting assembly drives the longitudinal conveying roller set upward to a position higher than the transverse conveying roller set. A height of the longitudinal conveying roller set is adjusted by the lifting assembly to enable the longitudinal conveying roller set and the transverse conveying roller set to be staggered up and down, so as to prevent friction resistance of the other roller set from interfering with the conveying of the sagger during the conveyance work of the transverse conveying roller set and the longitudinal conveying roller set, and ensure that the reversing mechanism 5 is able to stably convey the sagger and the blank material.

Referring to Fig. 1, in one embodiment, the inner track charging and discharging line includes an inner track charging line 32 provided at a charging end of the lower kiln body 1 and an inner track discharging line 33 provided at a discharging end of the lower kiln body 1. Two sides of the charging end of the inner track charging line 32 are in communication with the inner track main conveying line 31 and the reversing mechanism 5 respectively. The discharging end of the inner track discharge line 33 is in communication with another group of reversing mechanism 5; the reversing mechanism 5 transfers the sagger conveyed from the inner track discharging line 33 to the inner track main conveying line 31 through the transverse conveying roller set when the conveyance, loading and unloading are respectively performed through the two track lines. After loading is performed on the inner track main conveying line 31, the sagger and blank material are conveyed into the lower kiln body 1 for sintering by the inner track charging line 32. When only one track line is opened and the inner track main conveying line 31 is stopped, the reversing mechanism 5 conveys the sagger conveyed from the inner track discharging line 33 to the outer track main conveying line 41 through the longitudinal conveying roller set. After loading is performed on the outer track main conveying line 41, the sagger and blank material are conveyed to the inner track charging line 32 by the reversing mechanism 5 at the terminal end of the outer track main conveying line 41, and finally the sagger and blank material are conveyed to the lower kiln body 1 for sintering by the inner track charging line 32.

Referring to Fig. 1, in one embodiment, the outer track charging and discharging line includes an outer track charging line 44 provided at a charging port of the upper kiln body 2 and an outer track discharging line 45 provided at a discharging port of the upper kiln body 2. A discharging elevating frame 46 is mounted at a terminal end of the outer track discharging line 45, and one end of the discharging elevating frame 46 is in communication with the outer track main conveying line 41; a terminal end of the outer track main conveying line 41 is in communication with the reversing mechanism 5. A charging transfer line 42 is connected and mounted on one side of the reversing mechanism 5, and a charging elevating frame 43 is mounted between the charging transfer line 42 and the outer track charging line 44. The sagger on the outer circulation line is circularly conveyed among the outer track main conveying line 41, the reversing mechanism 5, the charging transfer line 42, the charging elevating frame 43, the upper kiln body 2, the outer track discharging line 45, and the discharging elevating frame 46, so as to perform loading and unloading and sintering of the blank material.

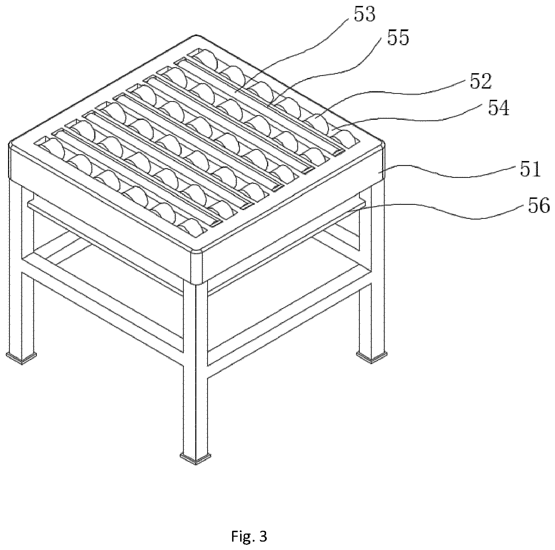

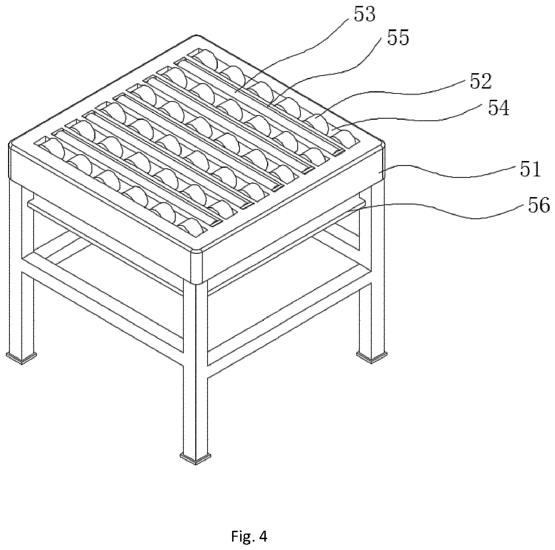

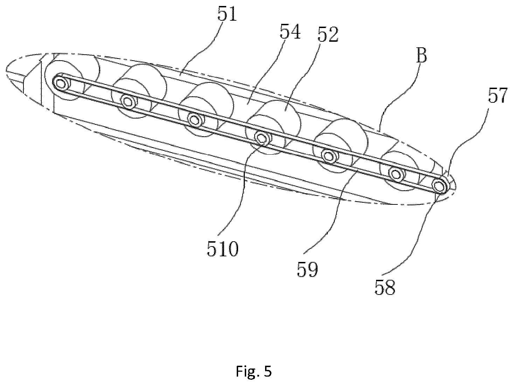

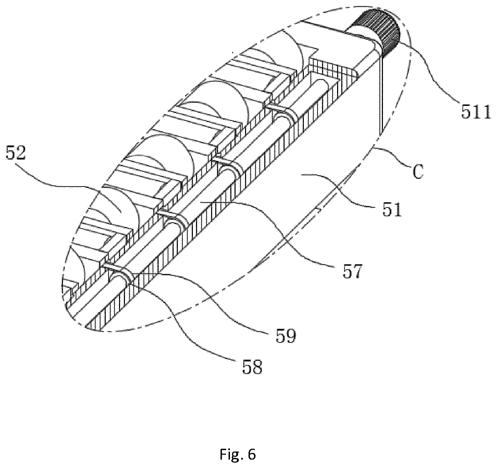

Referring to Figs. 3-6, in one embodiment, the transverse conveying roller set includes a plurality of roller shafts 52, a plurality of transverse conveying roller grooves 54, and a transverse conveying drive unit. In an implementation. The plurality of transverse conveying roller grooves 54 are distributed at an equal distance and opened on the top surface of the frame 51, the plurality of roller shafts 52 are rotatably mounted in each of the transverse conveying roller grooves 54, and the plurality of roller shafts 52 rotate synchronously under drive by the transverse conveying drive unit. The transverse conveying drive unit includes a main shaft 57, a transverse conveying motor 511 and a plurality of first driven wheels 510, wherein the main shaft 57 is rotatably mounted on one side of the frame 51 and is vertically distributed with the transverse conveying roller groove 54, and the transverse conveying motor 511 is fixedly mounted on one side of the frame 51 and is in transmission connection with one end of the main shaft 57. The main shaft 57 is fixedly mounted with a plurality of first driving wheels 58 corresponding to the transverse conveying roller grooves 54 one by one, the plurality of first driven wheels 510 are respectively fixedly mounted at one end of the plurality of roller shafts 52. The first driving wheels 58 are in transmission connection with the plurality of first driven wheels 510 in corresponding transverse conveying roller grooves 54 via a first transmission belt 59.

When the transverse conveying roller set works, the main shaft 57 is driven to rotate by the transverse conveying motor 511, so that the plurality of first driving wheels 58 on the main shaft 57 are driven to rotate synchronously. When the first driving wheels 58 rotate, the plurality of first driven wheels 510 and the roller shafts 52 in the corresponding transverse conveying roller grooves 54 are driven to rotate through the first transmission belt 59, such that all of the roller shafts 52 on the frame 51 are driven to rotate synchronously for transversal conveyance of the sagger thereon.

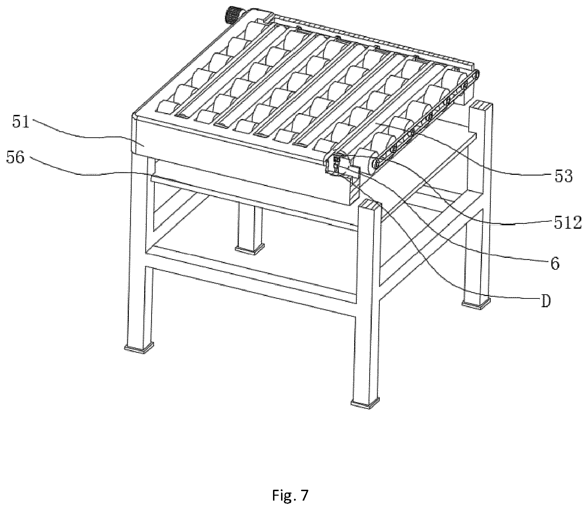

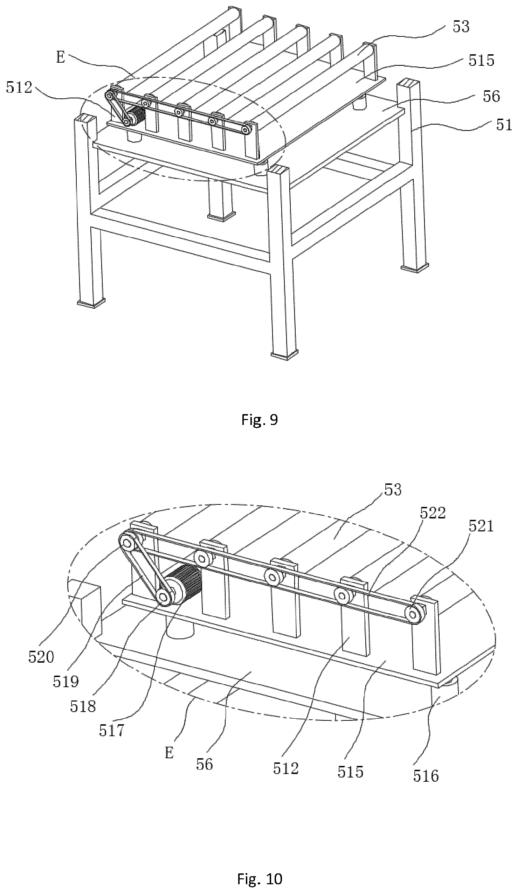

Referring to Figs. 7-10, in one embodiment, the longitudinal conveying roller set includes a plurality of rollers 53 and a plurality of longitudinal conveying roller grooves 55, wherein the plurality of longitudinal conveying roller grooves 55 are distributed at an equal distance and opened on the top surface of the frame 51, and the plurality of longitudinal conveying roller grooves 55 and the plurality of transverse conveying roller grooves 54 are distributed in a staggered manner. End plates 512 are slidably mounted at both ends inside each of the longitudinal conveying roller grooves 55, and the roller 53 is rotatably mounted between two end plates 512. The lifting assembly includes a support plate 56 fixedly mounted to an upper end of the frame 51. A lifting column 516 is fixedly mounted on a top surface of the support plate 56, and a lifting plate 515 is fixedly mounted on a top end of the lifting column 516. A bottom end of the end plate 512 is fixedly mounted on a top surface of the lifting plate 515; one side of the frame 51 is provided with a transmission groove 513 vertically distributed with the longitudinal conveying roller groove 55. The transmission groove 513 is in communication with the longitudinal conveying roller groove 55 via a lifting chute 514, one end of the roller 53 extends into the transmission groove 513 through the lifting chute 514, and a synchronization wheel 521 is fixedly mounted at an end of the roller 53. A plurality of synchronization wheels 521 are in transmission connection via the synchronization belt 522. A longitudinal conveying motor 517 is fixedly mounted on the top surface of the lifting plate 515. A second driving wheel 518 is mounted on an output shaft of the longitudinal conveying motor 517, a second driven wheel 520 is fixedly mounted on an end of one of the rollers 53. The second driving wheel 518 is in transmission connection with the second driven wheel 520 via a second transmission belt 519;

Here, an initial height of the roller 53 is lower than a mounting height of the roller shaft 52 so that the roller 53 does not affect the conveyance work of the roller shaft 52. When the longitudinal conveying roller set is operated, the lifting plate 515 is first driven upward by the lifting column 516, such that the roller 53 is driven upward, and then the height of the roller 53 is adjusted such that a top of the roller 53 is slightly higher than a top of the roller shaft 52. Then the second driving wheel 518 is driven to rotate by the longitudinal conveying motor 517, and at this time, the second driving wheel 518 drives the second driven wheel 520 to rotate via the second transmission belt 519, thereby driving the roller 53 connected to the second driven wheel 520 to rotate, and at the same time, the roller 53 drives the roller 53 t[A1]o rotate synchronously via the transmission of the synchronization wheel 521 and the synchronization belt 522, so as to longitudinally convey the sagger thereon.

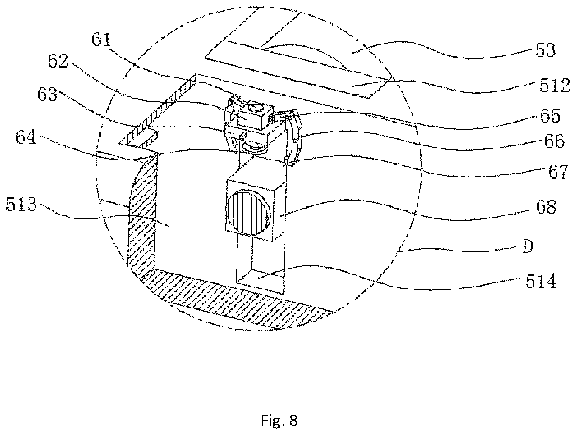

Referring to Figs. 7 and 8, in one embodiment, the frame 51 is further mounted with a locking mechanism 6 for clamping and limiting the roller 53. The locking mechanism 6 includes a positioning plate 63 and a lifting sliding block 68, the lifting sliding block 68 is slidably mounted in the lifting chute 514, and the lifting sliding block 68 is rotatably connected to an end of the roller 53. The positioning plate 63 is fixedly mounted on an upper end of the lifting chute 514, and a lifting shaft 61 is slidably mounted on the positioning plate 63. A bottom plate 64 is fixedly mounted on a bottom of the lifting shaft 61, and a lifting seat 62 is fixedly mounted on a top end of the lifting shaft 61. Both ends of the lifting seat 62 are rotatably mounted with a connecting rod 65, one end of which is inclined upward and rotatably connected with a lever 66. The lever 66 is rotatably mounted on the frame 51, and a bottom end of the lever 66 is rotatably mounted with a clamping block 67 located at one side of the lifting chute 514;
when the roller 53 moves upwards, the lifting sliding block 68 is driven to move upwards synchronously along the lifting chute 514, and when the roller 53 moves upwards to a working height, the lifting sliding block 68 moves the bottom plate 64 in abutment upwards, thereby driving the lifting shaft 61 and the lifting seat 62 to move upwards. During the upward movement of the lifting seat 62, the upper end of the lever 66 is pushed and moved outward by the connecting rod 65, so that the lower end of the lever 66 rotates and moves inward, so that the clamping blocks 67 on both sides of the lifting chute 514 are driven to move and close inward, and the lifting sliding block 68 is clamped and fixed, thereby improving the stability of the mounting of the lifting sliding block 68 and the roller 53.

Referring to Fig. 8, in one embodiment, a lower end of the lifting shaft 61 is sheathed with a spring abutting between the positioning plate 63 and the bottom plate 64. As the lifting sliding block 68 pushes the bottom plate 64 upward, the bottom plate 64 compresses the spring to retract to produce a restoring spring force. When the roller 53 drives the lifting sliding block 68 to restore downwards, the bottom plate 64 is no longer pushed and limited by the lifting sliding block 68, and at this time, the bottom plate 64 restores downwards under the action of the restoring spring force of the spring, thereby driving the lifting shaft 61 and the lifting seat 62 to move downwards and restore; and during the downward movement of the lifting seat 62, the upper end of the lever 66 is pulled inwards via the connecting rod 65, thereby rotating and moving the lower end of the lever 66 outwards, so as to drive the clamping blocks 67 on both sides of the lifting chute 514 to move outwards and open, so as to release the clamping on the lifting sliding block 68, thereby facilitating the downward movement and restoring of the lifting sliding block 68.

In the description of this specification, descriptions of the terms "an embodiment", "some examples", "specific examples", etc. mean that a particular feature, structure, material, or characteristic described in connection with the embodiment or example is included in at least one embodiment or example of the present disclosure. In this specification, schematic representations of the above-mentioned terms are not necessarily directed to the same embodiment or example.

The preferred embodiments of the disclosure disclosed above are intended only to help illustrate the present disclosure. The preferred embodiments neither set forth all the details specifically nor limit the disclosure to the specific implementations described but are limited by the appended claims.

## Claims

1. A double-layer kiln with a double-track external circulation line, comprising a lower kiln body (1) and an upper kiln body (2) arranged in a double-layered manner from bottom up, **characterized in that** an inner track line (3) is mounted between a charging port and a discharging port of the lower kiln body (1), an outer track line (4) is mounted between a charging port and a discharging port of the upper kiln body (2), and circulation conveying lines are surrounded between the lower kiln body (1) and the inner track line (3), and between the upper kiln body (2) and the outer track line (4) for circularly conveying a sagger carrying a blank material to be sintered;
**in that** the inner track line (3) comprises an inner track main conveying line (31) and an inner track charging and discharging line, the outer track line (4) comprises an outer track main conveying line (41) and an outer track charging and discharging line, and both ends of the inner track main conveying line (31) and the outer track main conveying line (41) are in communication with each other via a reversing mechanism (5), such that two groups of circulation conveying lines are in communication with each other, and the sagger is able to be exchanged and conveyed between the two groups of circulation conveying lines;
**in that** the reversing mechanism (5) comprises a frame (51), a transverse conveying roller set, a longitudinal conveying roller set and a lifting assembly, wherein the transverse conveying roller set and the longitudinal conveying roller set are distributed in a staggered manner on a top surface of the frame (51), and the longitudinal conveying roller set is mounted on the frame (51) via the lifting assembly;
**in that** the inner track charging and discharging line comprises an inner track charging line (32) provided at a charging end of the lower kiln body (1) and an inner track discharging line (33) provided at a discharging end of the lower kiln body (1), wherein two sides of a charging end of the inner track charging line (32) are respectively in communication with the inner track main conveying line (31) and the reversing mechanism (5), and a discharging end of the inner track discharging line (33) is in communication with another group of reversing mechanism (5);
**in that** the outer track charging and discharging line comprises an outer track charging line (44) provided at a charging port of the upper kiln body (2) and an outer track discharging line (45) provided at a discharging port of the upper kiln body (2), a discharging elevating frame (46) is mounted at a terminal end of the outer track discharging line (45), and one end of the discharging elevating frame (46) is in communication with the outer track main conveying line (41); and
**in that** a terminal end of the outer track main conveying line (41) is in communication with the reversing mechanism (5), a charging transfer line (42) is connected and mounted on one side of the reversing mechanism (5), and a charging elevating frame (43) is mounted between the charging transfer line (42) and the outer track charging line (44).

2. The double-layer kiln with a double-track external circulation line according to claim 1, wherein the transverse conveying roller set comprises a plurality of roller shafts (52), a plurality of transverse conveying roller grooves (54) and a transverse conveying drive unit, wherein the plurality of transverse conveying roller grooves (54) are distributed at an equal distance and opened on the top surface of the frame (51), the plurality of roller shafts (52) are rotatably mounted in each of the transverse conveying roller grooves (54), and the plurality of roller shafts (52) rotate synchronously under drive by the transverse conveying drive unit.

3. The double-layer kiln with a double-track external circulation line according to claim 2, wherein the transverse conveying drive unit comprises a main shaft (57), a transverse conveying motor (511) and a plurality of first driven wheels (510), wherein the main shaft (57) is rotatably mounted on one side of the frame (51) and is perpendicular to the transverse conveying roller groove (54), the transverse conveying motor (511) is fixedly mounted on one side of the frame (51) and is in transmission connection with one end of the main shaft (57); and
a plurality of first driving wheels (58) is provided on the main shaft (57) and correspond to the transverse conveying roller grooves (54) one by one, the plurality of first driven wheels (510) are fixedly mounted at one end of the plurality of roller shafts (52) respectively, and the first driving wheels (58) are in transmission connection with the plurality of first driven wheels (510) in corresponding transverse conveying roller grooves (54) via a first transmission belt (59).

4. The double-layer kiln with a double-track external circulation line according to claim 2, wherein the longitudinal conveying roller set comprises a plurality of rollers (53) and a plurality of longitudinal conveying roller grooves (55), wherein the plurality of longitudinal conveying roller grooves (55) are distributed at an equal distance and opened on the top surface of the frame (51), and the plurality of longitudinal conveying roller grooves (55) and the plurality of transverse conveying roller grooves (54) are distributed in a staggered manner; and
end plates (512) are slidably mounted at both ends inside each of the longitudinal conveying roller grooves (55), and the roller (53) is rotatably mounted between two end plates (512).

5. The double-layer kiln with a double-track external circulation line according to claim 4, wherein the lifting assembly comprises a support plate (56), wherein the support plate (56) is fixedly mounted on an upper end of the frame (51), a lifting column (516) is fixedly mounted on a top surface of the support plate (56), a lifting plate (515) is fixedly mounted on a top end of the lifting column (516), and a bottom end of the end plate (512) is fixedly mounted on a top surface of the lifting plate (515).

6. The double-layer kiln with a double-track external circulation line according to claim 5, wherein one side of the frame (51) is provided with a transmission groove (513) vertically distributed with the longitudinal conveying roller groove (55), the transmission groove (513) is in communication with the longitudinal conveying roller groove (55) via a lifting chute (514), one end of the roller (53) extends into the transmission groove (513) through the lifting chute (514), a synchronization wheel (521) is fixedly mounted at an end of the roller (53), and a plurality of synchronization wheels (521) are in transmission connection via a synchronization belt (522); and
a longitudinal conveying motor (517) is fixedly mounted on the top surface of the lifting plate (515), a second driving wheel (518) is mounted on an output shaft of the longitudinal conveying motor (517), a second driven wheel (520) is fixedly mounted on an end of one of the rollers (53), and the second driving wheel (518) is in transmission connection with the second driven wheel (520) via a second transmission belt (519).

7. The double-layer kiln with a double-track external circulation line according to claim 5, wherein a locking mechanism (6) is mounted on the frame (51) for clamping and limiting the roller (53), the locking mechanism (6) comprises a positioning plate (63) and a lifting sliding block (68), the lifting sliding block (68) is slidably mounted in a lifting chute (514), and the lifting sliding block (68) is rotatably connected to an end of the roller (53); and
the positioning plate (63) is fixedly mounted on an upper end of the lifting chute (514), a lifting shaft (61) is slidably mounted on the positioning plate (63), a bottom plate (64) is fixedly mounted on a bottom of the lifting shaft (61), a lifting seat (62) is fixedly mounted on a top end of the lifting shaft (61), a connecting rod (65) is rotatably mounted on both ends of the lifting seat (62), one end of the connecting rod (65) is inclined upwards and is rotatably connected to a lever (66), the lever (66) is rotatably mounted on the frame (51), and a bottom end of the lever (66) is rotatably mounted with a clamping block (67) located on one side of the lifting chute (514).

8. The double-layer kiln with a double-track external circulation line according to claim 7, wherein a lower end of the lifting shaft (61) is sheathed with a spring abutting between the positioning plate (63) and the bottom plate (64).

## Patentansprüche

1. Zweischichtiger Ofen mit einer zweigleisigen externen Zirkulationsbahn, bestehend aus einem unteren Ofenkörper (1) und einem oberen Ofenkörper (2), die von unten nach oben zweischichtig angeordnet sind, **dadurch gekennzeichnet, dass** eine innere Gleisbahn (3) zwischen einer Beschickungsöffnung und einer Entladeöffnung des unteren Ofenkörpers (1) angebracht ist, eine äußere Schienenbahn (4) zwischen einer Beschickungsöffnung und einer Entladeöffnung des oberen Ofenkörpers (2) angeordnet ist und Umlauf-Förderbahnen zwischen dem unteren Ofenkörper (1) und der inneren Schienenbahn (3) sowie zwischen dem oberen Ofenkörper (2) und der äußeren Schienenbahn (4) vorgesehen sind, um einen Saggar, der ein zu sinterndes Rohteil trägt, im Kreislauf zu befördern;
dass die innere Schienenbahn (3) eine innere Hauptförderstrecke (31) und eine innere Be- und Entladestrecke umfasst, die äußere Schienenbahn (4) eine äußere Hauptförderstrecke (41) und eine äußere Be- und Entladestrecke umfasst, und beide Enden der inneren Hauptförderstrecke (31) sowie der äußeren Hauptförderstrecke (41) über einen Umkehrmechanismus (5) miteinander verbunden sind, sodass zwei Gruppen von Umlauf-Förderlinien miteinander verbunden sind und der Scherbottich zwischen den beiden Gruppen von Umlauf-Förderlinien ausgetauscht und befördert werden kann;
dass der Umkehrmechanismus (5) einen Rahmen (51), einen Querförderrollensatz, einen Längsförderrollensatz und eine Hebevorrichtung umfasst, wobei der Querförderrollensatz und der Längsförderrollensatz versetzt auf einer Oberseite des Rahmens (51) angeordnet sind und der Längsförderrollensatz über die Hebevorrichtung am Rahmen (51) befestigt ist;
dass die Beschickungs- und Entladungslinie der inneren Bahn eine an einem Beschickungsende des unteren Ofenkörpers (1) vorgesehene Beschickungslinie der inneren Bahn (32) und eine an einem Entladungsende des unteren Ofenkörpers (1) vorgesehene Entladungslinie der inneren Bahn (33) umfasst, wobei zwei Seiten eines Beschickungsendes der Beschickungslinie der inneren Bahn (32) jeweils mit der Hauptförderlinie der inneren Bahn (31) und dem Umkehrmechanismus (5) in Verbindung stehen und ein Entladeende der Entladelinie der inneren Bahn (33) mit einer weiteren Gruppe von Umkehrmechanismen (5) in Verbindung steht;
dass die Außenbahn-Be- und Entladeleitung eine an einer Beschickungsöffnung des oberen Ofenkörpers (2) vorgesehene Außenbahn-Beschickungsleitung (44) und eine an einer Entladeöffnung des oberen Ofenkörpers (2) vorgesehene Außenbahn-Entladeleitung (45) umfasst, wobei an einem Endabschnitt der Außenbahn-Entladeleitung (45) ein Entlade-Hebegestell (46) angebracht ist, und ein Ende des Entlade-Heberahmens (46) mit der Hauptförderstrecke der Außenbahn (41) verbunden ist; und
dass ein Endabschnitt der Hauptförderstrecke (41) der äußeren Bahn mit dem Umkehrmechanismus (5) in Verbindung steht, eine Beschickungs-Übertragungsstrecke (42) an einer Seite des Umkehrmechanismus (5) angeschlossen und angebracht ist und ein Beschickungs-Hebegestell (43) zwischen der Beschickungs-Übertragungsstrecke (42) und der Beschickungsstrecke (44) der äußeren Bahn angebracht ist.

2. Der Doppelschicht-Ofen mit einer zweigleisigen Außenumlaufstrecke gemäß Anspruch 1, wobei der Querförderrollensatz eine Vielzahl von Rollenwellen (52), eine Vielzahl von Querförderrollennuten (54) und eine Querförderantriebseinheit umfasst, wobei die Vielzahl von Querförderrollennuten (54) in gleichem Abstand verteilt und an der Oberseite des Rahmens (51) angeordnet sind, die mehreren Rollenwellen (52) in jeder der Querförderrollen-Nuten (54) drehbar gelagert sind und sich die mehreren Rollenwellen (52) unter dem Antrieb durch die Querförderantriebseinheit synchron drehen.

3. Zweischichtiger Brennofen mit einer zweigleisigen Außenumwälzleitung nach Anspruch 2, wobei die Querförderantriebseinheit eine Hauptwelle (57), einen Querfördermotor (511) und mehrere erste Antriebsräder (510) umfasst, wobei die Hauptwelle (57) auf einer Seite des Rahmens (51) drehbar gelagert ist und senkrecht zur Querförderrollen-Nut (54) steht, der Querfördermotor (511) fest auf einer Seite des Rahmens (51) montiert ist und in Antriebsverbindung mit einem Ende der Hauptwelle (57) steht; und
auf der Hauptwelle (57) ist eine Vielzahl von ersten Antriebsrädern (58) vorgesehen, die jeweils einer der Querförderrollenrillen (54) zugeordnet sind, die mehreren ersten angetriebenen Rädern (510) sind jeweils an einem Ende der mehreren Rollenwellen (52) fest angebracht, und die ersten Antriebsräder (58) stehen über einen ersten Antriebsriemen (59) in Antriebsverbindung mit den mehreren ersten angetriebenen Rädern (510) in den entsprechenden Querförderrollenrillen (54).

4. Zweischichtiger Ofen mit einer zweigleisigen Außenumlaufstrecke nach Anspruch 2, wobei der Längsförderrollensatz eine Vielzahl von Rollen (53) und eine Vielzahl von Längsförderrollennuten (55) umfasst, wobei die Vielzahl der Längsförderrollennuten (55) in gleichen Abständen verteilt und an der Oberseite des Rahmens (51) angeordnet ist, und die mehreren Längsförderrollen-Nuten (55) sowie die mehreren Querförderrollen-Nuten (54) versetzt angeordnet sind; und
Endplatten (512) an beiden Enden innerhalb jeder der Längsförderrollennuten (55) verschiebbar gelagert sind und die Rolle (53) zwischen zwei Endplatten (512) drehbar gelagert ist.

5. Zweischichtiger Ofen mit einer zweigleisigen externen Zirkulationsleitung nach Anspruch 4, wobei die Hebevorrichtung eine Trägerplatte (56) umfasst, wobei die Trägerplatte (56) fest an einem oberen Ende des Rahmens (51) angebracht ist, eine Hubsäule (516) fest an einer Oberseite der Trägerplatte (56) angebracht ist, eine Hubplatte (515) fest an einem oberen Ende der Hubsäule (516) angebracht ist und ein unteres Ende der Endplatte (512) fest an einer Oberseite der Hubplatte (515) angebracht ist.

6. Zweischichtiger Ofen mit einer zweigleisigen externen Zirkulationsleitung nach Anspruch 5, wobei eine Seite des Rahmens (51) mit einer Übertragungsnut (513) versehen ist, die vertikal zur Längsförderrollen-Nut (55) verläuft, wobei die Übertragungsnut (513) über eine Hubrutsche (514) mit der Längsförderrollen-Nut (55) in Verbindung steht, sich ein Ende der Rolle (53) durch die Hebeschurre (514) in die Übertragungsnut (513) erstreckt, an einem Ende der Rolle (53) ein Synchronisationsrad (521) fest angebracht ist und mehrere Synchronisationsräder (521) über einen Synchronisationsriemen (522) in Antriebsverbindung stehen; und
ein Längsfördermotor (517) ist fest an der Oberseite der Hebeplatte (515) angebracht, ein zweites Antriebsrad (518) ist an einer Abtriebswelle des Längsfördermotors (517) angebracht, ein zweites angetriebenes Rad (520) ist fest an einem Ende einer der Rollen (53) angebracht, und das zweite Antriebsrad (518) über einen zweiten Antriebsriemen (519) mit dem zweiten angetriebenen Rad (520) in Antriebsverbindung steht.

7. Zweischichtiger Ofen mit einer zweigleisigen Außenumlaufstrecke nach Anspruch 5, wobei am Rahmen (51) ein Verriegelungsmechanismus (6) zum Festklemmen und Begrenzen der Rolle (53) angebracht ist, wobei der Verriegelungsmechanismus (6) eine Positionierplatte (63) und einen Hubgleitblock (68) umfasst, der Hubgleitblock (68) verschiebbar in einer Hubrutsche (514) gelagert ist und der Hubgleitblock (68) drehbar mit einem Ende der Rolle (53) verbunden ist; und
die Positionierplatte (63) ist fest an einem oberen Ende der Hubführung (514) angebracht, eine Hubwelle (61) ist verschiebbar an der Positionierplatte (63) angebracht, eine Bodenplatte (64) ist fest an einem unteren Ende der Hubwelle (61) angebracht, ein Hubsitz (62) ist fest an einem oberen Ende der Hubwelle (61) angebracht, eine Verbindungsstange (65) ist an beiden Enden des Hubsitzes (62) drehbar gelagert, ein Ende der Verbindungsstange (65) ist nach oben geneigt und drehbar mit einem Hebel (66) verbunden, der Hebel (66) ist drehbar am Rahmen (51) gelagert, und ein unteres Ende des Hebels (66) ist drehbar mit einem Klemmblock (67) verbunden, der sich an einer Seite der Hebeschurre (514) befindet.

8. Zweischichtiger Ofen mit einer zweigleisigen externen Zirkulationsleitung nach Anspruch 7, wobei ein unteres Ende des Hubschachts (61) mit einer Feder ummantelt ist, die zwischen der Positionierplatte (63) und der Bodenplatte (64) anliegt.

## Revendications

1. Four à double couche doté d'une ligne de circulation externe à double voie, comprenant un corps de four inférieur (1) et un corps de four supérieur (2) disposés en double couche de bas en haut, **caractérisé en ce qu'**une voie interne (3) est montée entre une ouverture de chargement et une ouverture de déchargement du corps de four inférieur (1), une ligne de circulation extérieure (4) est montée entre une ouverture de chargement et une ouverture de déchargement du corps supérieur (2) du four, et des lignes de transport en boucle sont formées entre le corps inférieur (1) du four et la ligne de circulation intérieure (3), ainsi qu'entre le corps supérieur (2) du four et la ligne de circulation extérieure (4), pour acheminer en boucle un bac de cuisson contenant une ébauche à fritter ;
**en ce que** la ligne de guidage intérieure (3) comprend une ligne de transport principale de guidage intérieure (31) et une ligne de chargement et de déchargement de guidage intérieure, la ligne de guidage extérieure (4) comprend une ligne de transport principale de guidage extérieure (41) et une ligne de chargement et de déchargement de guidage extérieure, et les deux extrémités de la ligne de transport principale de guidage intérieure (31) et de la ligne de transport principale de guidage extérieure (41) sont reliées l'une à l'autre par l'intermédiaire d'un mécanisme d'inversion (5), de sorte que les deux groupes de lignes de transport en boucle sont reliés l'un à l'autre, et que le creuset peut être transféré et transporté entre les deux groupes de lignes de transport en boucle ;
**en ce que** le mécanisme d'inversion (5) comprend un châssis (51), un ensemble de rouleaux de transport transversaux, un ensemble de rouleaux de transport longitudinaux et un ensemble de levage, l'ensemble de rouleaux de transport transversaux et l'ensemble de rouleaux de transport longitudinaux étant répartis de manière décalée sur une surface supérieure du châssis (51), et l'ensemble de rouleaux de transport longitudinaux étant monté sur le châssis (51) par l'intermédiaire de l'ensemble de levage ;
**en ce que** la ligne de chargement et de déchargement de la voie intérieure comprend une ligne de chargement de la voie intérieure (32) prévue à une extrémité de chargement du corps inférieur du four (1) et une ligne de déchargement de la voie intérieure (33) prévue à une extrémité de déchargement du corps inférieur du four (1), dans lequel les deux côtés d'une extrémité de chargement de la ligne de chargement de la voie intérieure (32) communiquent respectivement avec la ligne de transport principale de la voie intérieure (31) et le mécanisme d'inversion (5), et une extrémité de déchargement de la ligne de déchargement de la voie intérieure (33) communique avec un autre groupe de mécanismes d'inversion (5) ;
**en ce que** la ligne de chargement et de déchargement de la voie extérieure comprend une ligne de chargement de la voie extérieure (44) prévue au niveau d'un orifice de chargement du corps supérieur du four (2) et une ligne de déchargement de la voie extérieure (45) prévue au niveau d'un orifice de déchargement du corps supérieur du four (2), un châssis de levage de déchargement (46) est monté à une extrémité terminale de la ligne de déchargement de la voie extérieure (45), et qu'une extrémité du châssis de levage de déchargement (46) est reliée à la ligne de transport principale de la voie extérieure (41) ; et
**en ce qu'**une extrémité terminale de la ligne de transport principale de la voie extérieure (41) est en communication avec le mécanisme d'inversion (5), une ligne de transfert de chargement (42) est raccordée et montée sur un côté du mécanisme d'inversion (5), et un châssis de levage de chargement (43) est monté entre la ligne de transfert de chargement (42) et la ligne de chargement de la voie extérieure (44).

2. Four à double couche avec une ligne de circulation externe à double voie selon la revendication 1, dans lequel l'ensemble de rouleaux de transport transversaux comprend une pluralité d'arbres de rouleaux (52), une pluralité de rainures de rouleaux de transport transversaux (54) et une unité d'entraînement de transport transversal, dans lequel la pluralité de rainures de rouleaux de transport transversaux (54) est répartie à distance égale et s'ouvre sur la surface supérieure du châssis (51), la pluralité d'arbres de rouleaux (52) est montée de manière rotative dans chacune des rainures de rouleaux de transport transversaux (54), et la pluralité d'arbres de rouleaux (52) tourne de manière synchrone sous l'action de l'unité d'entraînement de transport transversal.

3. Four à double couche avec une ligne de circulation externe à double voie selon la revendication 2, dans lequel l'unité d'entraînement de transport transversal comprend un arbre principal (57), un moteur de transport transversal (511) et une pluralité de premières roues entraînées (510), dans lequel l'arbre principal (57) est monté de manière rotative sur un côté du châssis (51) et est perpendiculaire à la rainure de rouleau de transport transversal (54), le moteur de transport transversal (511) est monté de manière fixe sur un côté du châssis (51) et est en liaison de transmission avec une extrémité de l'arbre principal (57) ; et
une pluralité de premières roues motrices (58) est prévue sur l'arbre principal (57) et correspond une à une aux rainures des rouleaux de transport transversal (54), la pluralité de premières roues entraînées (510) est montée de manière fixe à une extrémité de la pluralité d'arbres de rouleaux (52) respectivement, et les premières roues motrices (58) sont en liaison de transmission avec la pluralité de premières roues entraînées (510) dans les rainures de rouleaux de transport transversaux (54) correspondantes via une première courroie de transmission (59).

4. Four à double couche avec une ligne de circulation externe à double voie selon la revendication 2, dans lequel l'ensemble de rouleaux de transport longitudinaux comprend une pluralité de rouleaux (53) et une pluralité de rainures de rouleaux de transport longitudinaux (55), dans lequel la pluralité de rainures de rouleaux de transport longitudinaux (55) est répartie à distance égale et s'ouvre sur la surface supérieure du châssis (51), et où la pluralité de rainures de rouleaux de transport longitudinaux (55) et la pluralité de rainures de rouleaux de transport transversaux (54) sont réparties de manière décalée ; et
des plaques d'extrémité (512) sont montées de manière coulissante aux deux extrémités à l'intérieur de chacune des rainures de rouleaux de transport longitudinaux (55), et le rouleau (53) est monté de manière rotative entre deux plaques d'extrémité (512).

5. Four à double couche avec une ligne de circulation externe à double voie selon la revendication 4, dans lequel l'ensemble de levage comprend une plaque de support (56), ladite plaque de support (56) étant montée de manière fixe sur une extrémité supérieure du châssis (51), une colonne de levage (516) étant montée de manière fixe sur une surface supérieure de la plaque de support (56), une plaque de levage (515) est montée de manière fixe sur une extrémité supérieure de la colonne de levage (516), et une extrémité inférieure de la plaque d'extrémité (512) est montée de manière fixe sur une surface supérieure de la plaque de levage (515).

6. Four à double couche avec une ligne de circulation externe à double voie selon la revendication 5, dans lequel un côté du châssis (51) est muni d'une rainure de transmission (513) disposée verticalement par rapport à la rainure longitudinale des rouleaux de transport (55), la rainure de transmission (513) communiquant avec la rainure longitudinale des rouleaux de transport (55) par l'intermédiaire d'une goulotte de levage (514), une extrémité du rouleau (53) s'étend dans la rainure de transmission (513) à travers la goulotte de levage (514), une roue de synchronisation (521) est montée de manière fixe à une extrémité du rouleau (53), et une pluralité de roues de synchronisation (521) sont reliées par transmission via une courroie de synchronisation (522) ; et
un moteur de transport longitudinal (517) est monté de manière fixe sur la face supérieure de la plaque de levage (515), une deuxième roue motrice (518) est montée sur un arbre de sortie du moteur de transport longitudinal (517), une deuxième roue menée (520) est montée de manière fixe sur une extrémité de l'un des rouleaux (53), et la deuxième roue motrice (518) est reliée à la deuxième roue menée (520) par l'intermédiaire d'une deuxième courroie de transmission (519).

7. Four à double couche avec une ligne de circulation externe à double voie selon la revendication 5, dans lequel un mécanisme de verrouillage (6) est monté sur le châssis (51) pour serrer et limiter le rouleau (53), le mécanisme de verrouillage (6) comprenant une plaque de positionnement (63) et un bloc coulissant de levage (68), le bloc coulissant de levage (68) est monté de manière coulissante dans une goulotte de levage (514), et le bloc coulissant de levage (68) est relié de manière rotative à une extrémité du rouleau (53) ; et
la plaque de positionnement (63) est montée de manière fixe sur une extrémité supérieure de la goulotte de levage (514), un arbre de levage (61) est monté de manière coulissante sur la plaque de positionnement (63), une plaque inférieure (64) est montée de manière fixe sur une partie inférieure de l'arbre de levage (61), un siège de levage (62) est monté de manière fixe sur une extrémité supérieure de l'arbre de levage (61), une bielle (65) est montée de manière rotative aux deux extrémités du siège de levage (62), une extrémité de la bielle (65) est inclinée vers le haut et est reliée de manière rotative à un levier (66), le levier (66) est monté de manière rotative sur le châssis (51), et une extrémité inférieure du levier (66) est montée de manière rotative avec un bloc de serrage (67) situé sur un côté de la goulotte de levage (514).

8. Four à double couche avec une ligne de circulation externe à double voie selon la revendication 7, dans lequel une extrémité inférieure de l'arbre de levage (61) est gainée d'un ressort venant en butée entre la plaque de positionnement (63) et la plaque inférieure (64).
